# EUROPEAN PATENT SPECIFICATION

(11) **EP 0 489 729 B1**
(45) Date of publication and mention of the grant of the patent: **04.01.1995**
(21) Application number: 89912294.9
(22) Date of filing: 28.08.1989
(51) Int. Cl.: C01B 35/04, C04B 35/58, F16C 33/04, B21C 3/02

(54) **PROCESS FOR MAKING HIGHLY REACTIVE SUB-MICRON AMORPHOUS TITANIUM DIBORIDE POWER AND PRODUCTS MADE THEREFROM**
VERFAHREN ZUR HERSTELLUNG HÖCHSTREAKTIVER SUBMIKRON AMORPHER TITANDIBORIDPULVER UND ERZEUGNISSE DARAUS
PROCEDE DE FABRICATION D'UNE POUDRE DE DIBORURE DE TITANE AMORPHE HAUTEMENT REACTIVE D'UNE TAILLE SOUS-MICRONIQUE ET PRODUITS REALISES A PARTIR DE CELLE-CI

(43) Date of publication of application: 17.06.1992
(73) Proprietor: GEORGIA TECH RESEARCH CORPORATION, Atlanta, GA 30332-0400 (US)
(72) Inventor: GEORGIA TECH RESEARCH CORPORATION, Atlanta, GA 30332-0400 (US)
(74) Representative: Barendregt, Frank, Drs.
(86) International application number: US8903707
(87) International publication number: WO9103423

(56) References cited:
- GB-A- 1 497 025
- JP-A-60 235 717
- US-A-39 294 76
- US-A-45 030 21
- US-A-46 891 29

## Description

This invention relates to the production of titanium diboride and is directed to an improved highly reactive, non- pyrophoric, sub-micron amorphous and/or crystalline titanium diboride powder, and coatings, layers, components, and monolithic shapes made therefrom.

A variety of methods have been developed for producing metal boride powders such as titanium diboride, as follows:
1. Direct combination of the metal with boron or a metal hydride and boron.
2. Hydrogen reaction of a boron halide with a metal source such as an oxide.
3. Electrolysis of a melt consisting of a metal oxide, boron oxide, and an alkali flux.
4. Reduction of a metal oxide with boron (borothermic) or co-reduction with oxide by carbon (carbothermic).
5. Reduction of oxides by metals.
6. Arc-plasma reaction from vapor reactants.

Methods 1-3 are used mainly in laboratory experimentation. Method 4 has been employed commercially but the borothermic method requires large amounts of boron over what the final product contains and is thus too wasteful for high production levels. The carbothermic method, however, is the one generally used to commercially produce titanium diboride. In this method, the raw materials are heated to a temperature in the range of 1800-2000°C until titanium diboride is formed. The powdered titanium diboride ultimately recovered requires forming temperatures in about this same range. Method 5 has been attempted but found to produce contaminants of other borides as well as borates and titanates, and has not been considered a commercially viable method. Method 6 produces pyrophoric titanium diboride from expensive reagents.

The principle disadvantages of the above methods are, for 1, expensive raw materials and the likelihood of formation of potentially explosive boranes; for 2-4, expensive raw materials and reaction vessels; for 5, production of contaminant borides, borates and titanates; and for 6, expensive raw materials, reaction vessels and formation of pyrophoric titanium diboride.

The carbothermic method, method 4, is currently being used commercially to produce relatively large grained, crystalline titanium diboride. High temperatures (1800-2000°C) are required in the processing; and in order to obtain the product in sub-micron size, final grinding, a source of contamination,is also required. The resultant powdered, sub-micron titanium diboride is crystalline (hexagonal), low in surface area (6m²/gm BET), and is difficult to sinter and form into dense shapes. The powder must be vacuums sintered at 2200°C or hot Pressed under high pressure at 1800-2200°C. Even at carefully controlled processing conditions, micro-stresses are caused by grain growth and thermal expansion of individual crystallites by different amounts in the a and c directions.

Another titanium diboride material disclosed by Byrnestad, U.S. Patent No. 4,503,021, is an ultra-fine material with a particle size of less than 1/10 of a micron. However, this material has a relatively small surface area and is highly pyrophoric. Other disadvantages of the Byrnestad material include the need for relatively high temperature and pressure in forming dense shapes by hot pressing or sintering. Additionally, the dense shape formed from the Brynestad material has a relatively large grain size, a relatively low modulus of rupture and a relatively low elastic modulus.

A Japanese titanium diboride, Japanese patent No. 089363, is a non-pyrophoric material having a grain size of less than 2.5 microns; however, the Japanese material is produced by using an excess of MgO in the raw materials to control the violent reaction. The resulting MgO/TiB₂ powder is purified by using chloride based leach solutions which can result in a chlorine-contaminated final product. Additionally, the raw materials must be ball milled together prior to reaction, a process which along with adding impurities from the milling process adds extra time and expense. The resultant TiB₂ must be ultra-centrifuged to remove the supernatant liquid, another processing step adding to the cost. A further disadvantage of the Japanese product is the need to form the product in an inert atmosphere (argon), thus also adding expense.

### SUMMARY OF THE INVENTION

The invention is embodied in a method for making submicron titanium diboride as claimed in claim 1 and dependent claims 2-12 inclusive. Further the invention relates to a material of manufacture as claimed in claim 13 and dependent claims 14-22 inclusive. The invention also relates to a method for making a shaped product as claimed in claims 23-25.

In accord with this invention, a highly reactive, non-pyrophoric sub-micron titanium diboride powder of variable crystallinity (amorphous to crystalline) and purity, dependent on control of processing parameters, and MgO are produced in situ from an exothermic reaction mixture (which is leached to remove the MgO), thereby eliminating the need for grinding, and attaining, for the first time it is believed, sub-micron titanium diboride powder of highly reactive, non- pyrophoric form. By "highly reactive" is meant sufficient reactivity to significantly decrease the temperature required for forming dense, non-porous structures. Products of this invention may be formed into dense structures by hot pressing at temperatures in the range of 1300-1500°C, as opposed to the normally required range of 1800-2200°C, or, feasibly, formed into a layer or coating by melt spraying onto a suitable substrate.

A process parameter which affects whether, or the degree to which the resultant product is amorphous, is the rapidity with which the powder is formed and cooled after the exothermic reaction and the ability to suspend the powder during the reaction preventing localized agglomeration, sintering and grain growth.

The purity of the product, e.g., the absence of other borides, borates and titanates therein, is strongly dependent upon control of the weight amounts of the components of the reaction mixture. The absence of borates and titanates formed during the leaching step also is strongly dependent upon the pH control and temperature of the leaching solution. It has been found that if the temperature of the leaching solution is kept at about 90°C and the pH between 2.5 and 4, the best results are obtained. It also has been found that if the magnesium and the boron oxide are present in amounts of about 5-30% in excess of stoichiometric in the reaction mixture, other boride, borate and titanate formation will be minimized. When the magnesium and boron oxide are present in excess of stoichiometric, the best results are attained.

The process producing this invention appears inherently to provide the titanium diboride in sub-micron, highly reactive, non-pyrophoric form and is practiced successfully when the reducing metal of the exothermic reaction is magnesium.

Accordingly, it is an object of this invention to provide a titanium diboride material of variable crystallinity and high purity which is also highly reactive and non- pyrophoric.

It is another object of this invention to provide a titanium diboride material which can be hot-pressed or sintered into a highly dense shape at a temperature lower than that required of known titanium diboride materials.

It is a further object of this invention to provide a titanium diboride material which is non-pyrophoric, sub-micron in size and has a relatively large surface area.

It is another object of this invention to provide a titanium diboride material which can be formed into a dense shape having an elongated intermeshed microstructure.

It is yet another object of this invention to provide a dense form of titanium diboride material which has extreme impact, corrosion, temperature and wear resistance characteristics.

These and other objects of the invention will become apparent as this description proceeds.

### BRIEF DESCRIPTION OF THE DRAWING

Fig. 1 is an X-ray diffraction chart of the product obtained by this invention.

Fig. 2 is an illustration of a continuous processing method of the present invention.

Fig. 3 is an electron micrograph of the product obtained by this invention.

Fig. 4(a) is an electron micrograph of the carbothermic product with a side-by-side comparison with an electron micrograph of the product of this invention, Fig. 4(b).

Fig. 5(a) is an electron micrograph of the microstructure of the dense shape material produced from the powder of the carbothermic process.

Fig. 5(b) is an electron micrograph of the microstructure of the dense shape material produced from the powder of this invention.

### DETAILED DESCRIPTION OF THE INVENTION

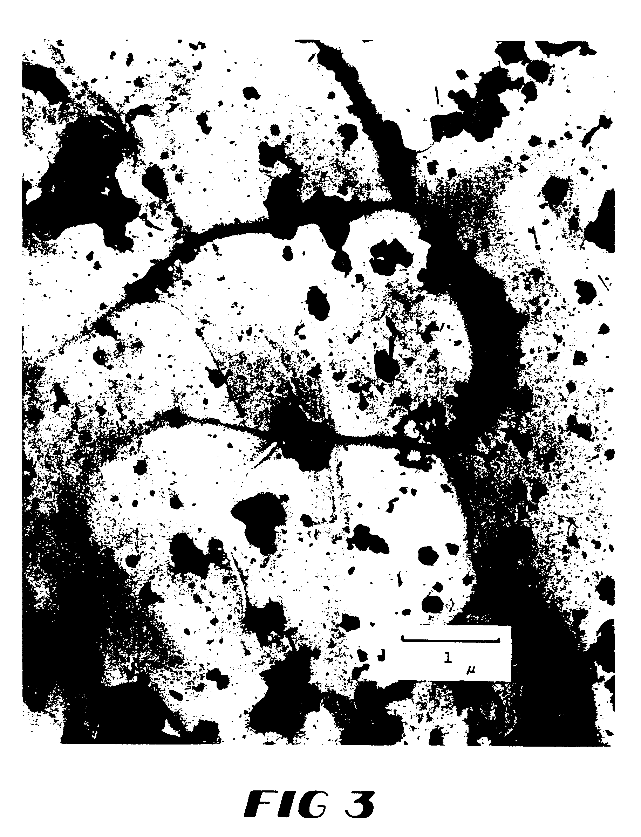

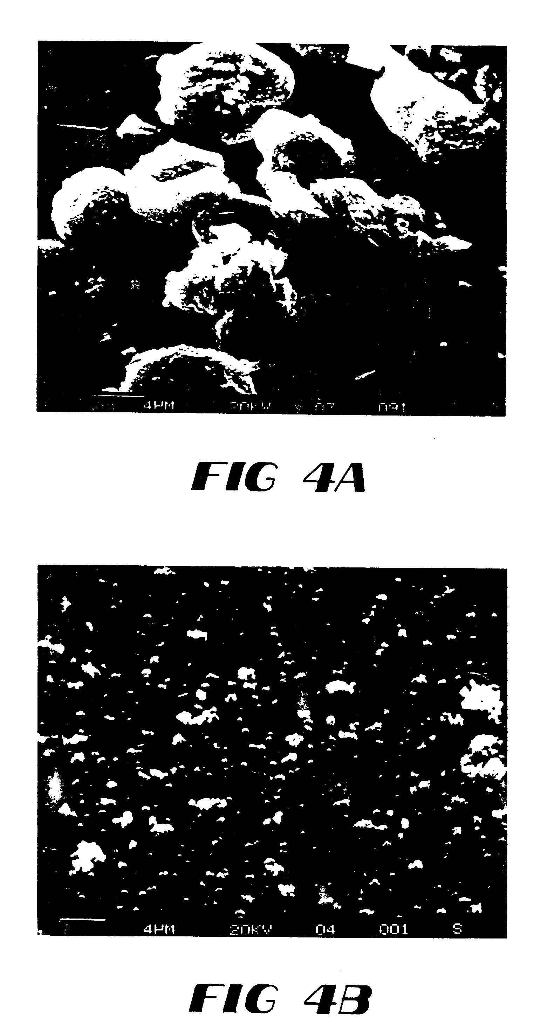

The titanium diboride powder contemplated by the best mode of this invention has a variable crystallinity, ranging from an amorphous to crystalline structure. The particle size of the powder is sub-micron, that is less than 1 micron (Fig. 3), band has a surface area of greater than about 25 m²/g. Fig. 4(a) is an electron micrograph of the carbothermic product with a side-by-side comparison with an electron micrograph of the product of this invention shown in Fig. 4(b). The magnification of both Figs. 4(a) and 4(b) is 5000x. Table I contains values for pertinant characteristics of this invention along with a comparison with three of the known titanium diboride materials.

**TABLE I**

| POWDER PROPERTIES | | | | |
|---|---|---|---|---|
| PROPERTIES | APPLICANT | JAPANESE | BRYNESTAD | CARBOTHERMIC |
| 1. RAW MATERIALS | inexpensive TiO₂/B₂O₃/Mg | TiO₂/B₂O₃/Mg/MgO (Ball Mill) | expensive TiCl₄/BCl₃/H₂ (sol/gases) | TiO₂/B₄C/C |
| 2. LEACHING | HNO₃ | NH₄Cl, HCl | | |
| 3. TEMPERATURE | room temp | 650-1000°C | | |
| 4. ATMOSPHERE | air | argon | | |
| 5. PARTICLE SIZE | 1.0 micron | 2.5 micron | .001-.1 micron | 2-10 microns |
| 6. PYROPHORIC? | No | | Yes | No |
| 7. CRYSTALLINITY | Amorphous/Crystalline | Crystalline | Amorphous/Crystalline | Crystalline |
| 8. SURFACE AREA | 25-49 m²/gm | | 7 m²/gm | 7 m²/gm |

| 9. PRODUCT CHEMISTRY | | | | |
|---|---|---|---|---|
| main component | TiB₂/MgO | TiB₂/MgO+ | TiB₂ | TiB₂ |
| trace comps. | borate/titanate other borides | Cl | Cl | TiO₂/B₂O₃ C/O carbides |

The hardness of a dense hot-pressed product formed from the titanium diboride material of this invention ranges from about 2800 to about 3400 Knoop, the elastic modulus ranges from about 700 to about 813 GPa, and the forming temperature ranges from about 1300°C to about 1500°C. The aspect ratio of the grains in a dense shape produced from the powder of this invention can range from about 2:1 to about 100:1 or more (l/d) depending on the densification heat treatment.

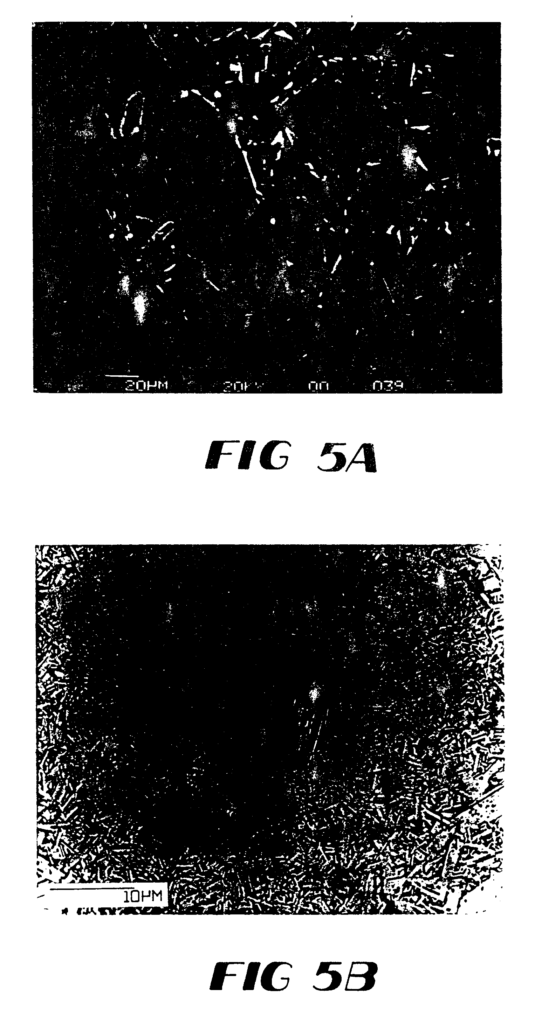

A sample dense shape formed of the titanium diboride powder of the present invention was tested to determine various characteristics. A three-eights inch (3/8") thick disc with an outer diameter of one and one-quarter inches (1 1/4") was formed by subjecting the material to a temperature of 1400°C at 100 psi for 2 hours. The resulting denser shape had a nominal density of 100% pₜ, a modulus of rupture of 450 MPa, a toughness of 5.5 MPa/m, an elastic modulus of 813 GPA, and a hardness of 3400 Knoop. The size of the titanium diboride grains was about 10-15 microns with an elongated microstructure or morphology having an aspect ratio of about 10:1 (l/d). Fig. 5(b) is an electron micrograph (magnification = 100x) of the microstructure of the dense shape material formed of the titanium diboride powder of the present invention.

Table II contains values for pertinant characteristics of this sample dense shape along with a comparison with two of the known titanium diboride material dense shapes. Values for the characteristics listed in Table II are well known in this field, as shown by Baumgartner, H.R. and Steiger, R.A., Sintering and Properties of Titanium Diboride Made from Powder Synthesized in a Plasma-Arc Heater, Journal of the American Ceramic Society, 67 [3], 207-11 (1984), and Ferber, M.K., Becher, P.F., and Finch, C.B., Effect of Microstructure on the Properties of TiB₂ Ceramics, Communications of the American Ceramic Society, C-2-3 (1983), which are incorporated herein by this reference.

**TABLE II**

| DENSE SHAPE PROPERTIES | | | |
|---|---|---|---|
| PROPERTIES OF SAMPLE DENSE SHAPES | GTRI | BRYNESTAD | CARBOTHERMIC |
| 1. SAMPLE SIZE | disk, 3/8" 1-1/4"OD | one gram | |
| 2. FORMING TEMP | 1400°C | 1600°C | 2000°C |
| 3. FORMING PRES | 100 psi | 4500psi/35MPa | |
| 4. FORMING TIME | 2 hours | | |
| 5. DENSITY | 100% p | 98% p | 98% p |
| 6. GRAIN SIZE | 10-15 microns | 80 micron | 4.5-40 microns |
| 7. MORPHOLOGY | L/D=10/1 (elongated) | | equiaxed |
| 8. CHEMISTRY | TiB₂ | | TiB₂/TiC grain boundaries |
| 9. MOD OF RUPT | 450 MPa | 325 MPa | 425 MPa |
| 10. TOUGHNESS | 5.5 MPa/m | 5.0 MPa/m | 5.75 MPa/m |
| 11. ELASTIC MOD | 813 GPa | 540 GPa | 540 GPa |
| 12. HARDNESS | 3400 Knoop | | 2400 Knoop |

In contrast to the microstructure, Fig. 5(b), resulting fom hot pressing the TiB₂ powder of my present invention is the microstructure shown in Fig. 5(a) resulting from hot pressing the carbothermic powders product. The product shown in Fig. 5(a) was formed by hot pressing at 2000°C and at the conditions listed in Table II. It is seen that the resultant grain morphology from hot pressing the carbothermic powder product, having equiaxed grains and titanium carbide grain boundaries (as evidenced from the lighter shaded areas surrounding the grains) is radically different from the hot pressed product of my invention. In forming a dense shape by hot pressing the titanium diboride powder of the present invention, the process parameters of temperature, pressure and time are dependent upon the shape of the article to be formed. By employing my titanium diboride powder, these process parameters may be substantially reduced over the corresponding pressure, temperature and time required to form a dense shape from the carbothermic powder product referred to herein. Generally, dense shapes may be formed from my titanium diboride powder at temperatures at about 1500°C or lower, at pressures in the range of about 100 to about 6000 psi and over a time period of about 2 to about 4 hours.

Hot pressing is not the only technique which may be employed to form a dense shape from my titanium diboride powder. The reduced temperature requirement for densification of my powder allows for formation of a dense shape by, for example, pressureless sintering or other known densification processes.

In forming the titanium diboride powder of this invention, it is not necessary to mill the raw materials together prior to reaction. However, the selection of the leaching solution will affect the resultant grain morphology of the formed dense shape. Titanium diboride powder products may be formed employing either HCL or NH₄CL in the leaching solution, resulting in chlorine/chloride contamination of the final powder product and the product being pyrophoric. The use of nitric acid as the leaching solution, on the other hand, seems to encourage grain growth on densification of my titanium diboride powder. Further, nitric acid results in a purer final product, free from contaminants such as chlorine/chloride products associated with other titanium diboride materials. Selection of sulfuric acid as the leaching solution conversely seems to inhibit grain growth. Accordingly, control of resultant grain morphology and size on densification of my titanium diboride powder may be achieved through appropriate selection of the leaching solution.

An anatase TiO₂ raw material is used in the process forming the TiB₂ of this invention which is believed may be an additional cause of the formation of the unique microstructure of this invention. Additionaily, Mg flake raw material is used to avoid the risk of explosion inherent in the use of atomized Mg powder. Lastly, the reaction producing the TiB₂ of this invention is carried out safely in an air atmosphere unlike known TiB₂ production reactions which occur in an inert atmosphere. The process for producing the TiB₂_{,} powder of this invention is described in more detail in the following examples.

### Example 1

Stoichiometric amounts of TiO₂, B₂O₃ and Mg, each of particle size to pass 50 mesh (USA Standard Mesh) were mixed to provide the thermite type exothermic reaction mixture. The reaction mixture was ignited in air at atmospheric pressure by local heating with nichrome wire. Upon ignition, the reaction proceeded vigorously to completion. The reaction products were found to contain MgO, other borides, borate and titanate contaminants, although the titanium diboride was present in sub-micron, highly reactive form.

### Example 2

Stoichiometry as in Example 1 was varied over the range of about 5% to about 30% excess of Mg and B₂O₃ in a series of Examples and it was discovered that the amounts of the contaminants in the form of other borides, borates and titanates were reduced. An excess of about 10% of the above metal and oxide was found to produce the least amounts of these contaminants in 100 gm batches. The excesses were adjusted whenever the ignition batch size was changed.

### Example 3

Products obtained in accord with Examples 1 and 2 were leached with a dilute HNO₃ solution to remove the magnesium oxide resulting from the exothermic reaction. It was found that if the solution is allowed to be extremely acidic (less than about pH 0.5) titanates would form rapidly. Whereas, if the solution is allowed to be alkaline (pH of more than about 8.0), borates would form rapidly.

The relative success of the acid wash was visually apparent from the relative "grayness" of the recovered powder. Light gray indicated that the recovered powder contained contaminants of TiO₂. Black powder indicated the presence of borates and titanates. A dark gray color indicated that the recovered powder was largely or substantially completely a mixture of amorphous and crystalline titanium diboride.

The powders recovered after acid wash were so fine that it was necessary to recover them by ultra centrifuge and then filtering the suspension. However, the suspension was found to flocculate at a pH of 2.5 - 4.0 tending to cause the titanium diboride particles to easily settle out of the suspension, therefore ultra-centrifuging was not necessary to recover the powder at this adjusted pH. It was found that initially the acid should be kept within about 5-10% HNO₃ concentrations to attain best recovery of the titanium diboride.

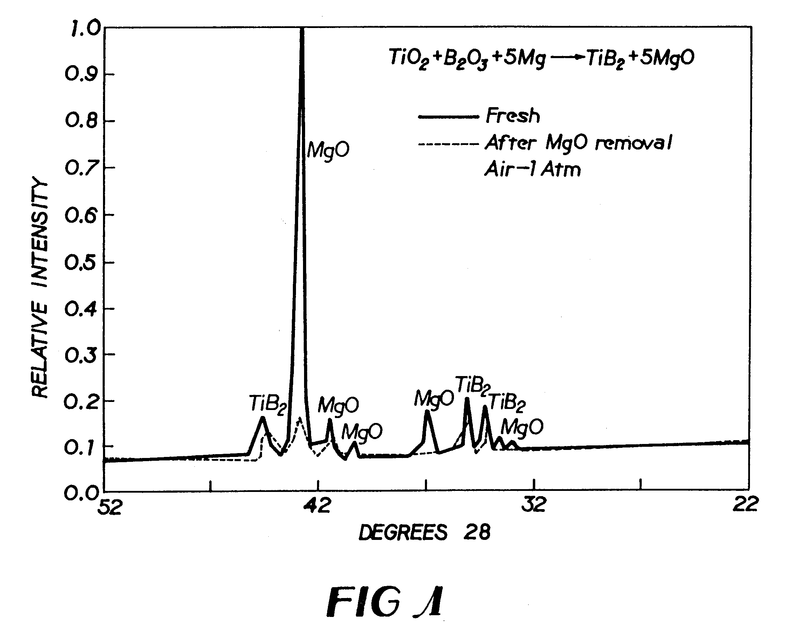

An X-ray diffraction chart as in the drawing, Fig. 1, revealed that the reaction products are magnesium oxide and titanium diboride, apparently poorly crystallized. Electron microprobe analysis of the leached product revealed that it contained 98.6% pure titanium diboride, and EDXRA of individual particles showed no magnesium remaining. Preliminary transmission electron microscopy revealed irregular morphology particles 1 micron size or less. Selected area diffraction (SAD) of single particles showed no defined crystallinity of the majority of particles analyzed. Since X-ray diffraction (and SAD) are dependent on relative crystallinity, the powdered product of this invention clearly appears to be amorphous.

The degree to which the highly reactive powder of this invention is amorphous has been found to be dependent in part upon the rapidity with which the reaction products are cooled. Thus, where a large mass of the reaction mixture is ignited and the reaction has gone to completion, it is important to prevent localized sintering by suspending the particles and to quench the reaction product immediately, or otherwise to increase the rate of cooling to ambient temperature. If the powder is allowed to remain in the reaction vessel, crystallinity and grain growth occur. The suspension and rapid quenching of the reaction product produces a sub-micron, substantially amorphous powder.

### Example 4

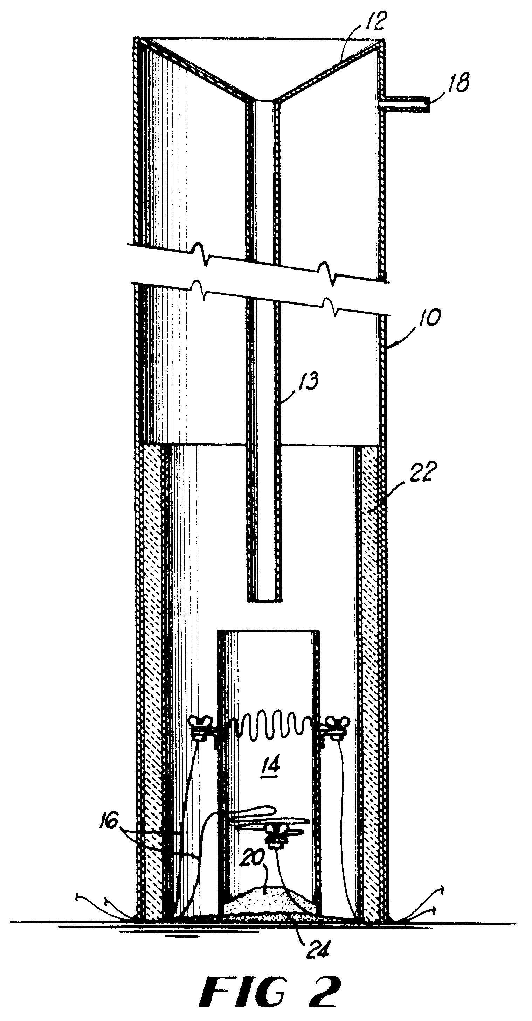

In an attempt to suspend the particles during the reaction thus achieving rapid quenching and preventing local sintering and grain growth,_{,} a continuous processing method was developed. Fig. 2 illustrates the continuous processing method which comprises a column 10 designed so the raw materials could be gravity fed through a funnel 12, a glass tube 13 and into a hot zone 14 created by resistance heated hot wires 16,16. The raw materials ignited producing a sub-micron product which escaped as a smoke out of the opening 18 in the top of the column 10 as well as a recovered TiB₂/MgO product 20 at the base of the column 10 which was comparable to the product in Example 2.

Metal and refractory wool insulation 22 was used around the hot zone 14 and MgO was used as insulation at the base of the column 10. The column technique was noted to be a possible continuous processing technique. The recovered product was leached as in Example 3 above.

The high reactivity of this invention allows the titanium diboride material with unique microstructure to be formed, by hot press means or otherwise, into many different components useful in as many different applications. One important class of applications involves components formed of this material to be used in extreme environments such as high temperature, highly corrosive, highly abrasive, or high impact environments or the like. For example, this material is particularly well-adapted for wear parts such as bearings and dies, impact parts such as bumpers and engine components, and thermally-subjected parts that experience extreme rapid changes in temperature.

The TiB₂ of this invention is also well-suited for electrical applications such as electrodes or semi-conductor barrier substrates, high abrasion parts such as cutting tools and grinding and polishing materials, and laser hardening materials. This material also, is highly corrosion resistant and can be used in extremely corrosive environments.

Although the invention has been presented in considerable detail for the purpose of illustration in the above description and examples, they are not intended to limit the invention of this application, which is as defined in the claims below.

## Claims

1. A method of making sub-micron titanium diboride which comprises the steps of forming a powdered reaction mixture consisting essentially of titanium oxide, boron oxide and magnesium, exothermically reacting the reaction mixture in air to yield a reacted mass containing titanium diboride and magnesia, and leaching the reacted mass with a leaching solution having a pH in the range of about 0.5 to about 8, to recover the sub-micron titanium diboride.

2. A method of making amorphous and crystalline titanium diboride of sub-micron particle size, which comprises the steps of:
forming a powdered reaction mixture consisting essentially of titanium oxide, boron oxide and magnesium in which the magnesium and boron oxide are present in weight amounts within the range of about 5-30% in excess to their stoichiometric amounts;
locally iginiting said reaction mixture in air to react the reaction mixture exothermically;
cooling the resultant product from the exothermic reaction;
leaching the reacted mass with a leaching solution having a pH in the range of about 0.5 to about 8 until the reacted, leached mass contains substantially only titanium diboride in the leaching solution; and
recovering sub-micron titanium diboride powder from the leaching solution.

3. A method of making sub-micron titanium diboride which comprises the steps of forming a powdered reaction mixture consisting essentially of titanium oxide, boron oxide and magnesium, exothermically reacting the reaction mixture in air to yield a reacted product containing titanium diboride and magnesia, rapidly cooling the reacted product and then leaching the reacted product with a leaching solution having a pH in the range of about 0.5 to about 8 to recover sub-micron titanium diboride.

4. The method of claim 2, wherein the magnesium and boron oxide are present in weight amounts of about 10% in excess of their stoichiometric amounts.

5. The method of claim 3, wherein the exothermic reaction of the powdered reaction mixture is a continuous process.

6. The method of claim 1, wherein the exothermic reaction is initiated by local ignition.

7. The method of claim 1, wherein the reduction of titanium oxide and boron oxide with magnesium is initiated by local ignition.

8. The method of claim 1, wherein the magnesium and boron oxide are present in weight amounts within the range of about 5-30% in excess of their stoichiometric amounts.

9. The method of claim 1, wherein the step of reducing titanium oxide and boron oxide with magnesium includes feeding the reactants through a funnel into a hot zone within the funnel and igniting the reactants within the hot zone.

10. The method of claim 3, wherein the reactants are ignited by local ignition.

11. The method of claim 9, wherein the reactants are ignited by local ignition.

12. The method according to claim 2 or 3 characterized in that a nitric acid solution is used as leaching solution.

13. A material of manufacture comprising sub-micron particulate titanium diboride formed by a process which comprises the steps of:
(a) forming a powdered reaction mixture comprising of titanium oxide, boron oxide and magnesium;
(b) exothermically reacting the reaction mixture in air to yield a reacted mass containing titanium diboride and magnesia;
(c) leaching the reacted mass with a leaching solution having a pH in the range of about 0.5 to about 8; and
(d) recovering sub-micron particulate titanium diboride having an average particle size of one micron or less from the leaching solution.

14. The material according to claim 13 characterized in that in step c) a nitric acid solution has been used as a leaching solution.

15. The material of manufacture as described in claim 13, wherein said material is amorphous sub-micron titanium diboride.

16. The material of manufacture as described in claim 13, wherein said material is crystalline sub-micron titanium diboride.

17. The material of manufacture as described in claim 13, wherein said material is a mixture of amorphous and crystalline sub-micron titanium diboride.

18. The material of manufacture as described in claim 13, wherein said material has a surface area of greater than about 25 m²/g.

19. Shaped product obtained by forming the particulate titanium diboride of claim 13 into a dense shape at a forming temperature of about 1.500°C or less.

20. The material of manufacture as described in claim 19, wherein said material has a hardness from about 2.800 to about 3.400 Knoop.

21. The material of manufacture as described in claim 19, wherein said material has an elastic modulus from about 700 to about 813 GPa.

22. The material of manufacture as described in claim 19, wherein said material has a grain morphology aspect ratio of from about 2:1 to about 100:1.

23. A method for making a shaped product according to claim 19, in which the particulate titanium diboride is formed into a dense shape at from about 689 kPa (100 psi) to about 41.4 MPa (6000 psi) and from about two to about four hours.

24. A method for making a shaped product according to claim 19, in which the particulate titanium diboride is formed into a dense shape by hot pressing.

25. A method for making a shaped product according to claim 19, in which the particulate titanium diboride is formed into a dense shape by pressureless sintering.

## Patentansprüche

1. Verfahren zur Herstellung von Submikron-Titandiborid, das die Stufen der Bildung eines pulverisierten Reaktionsgemisches, das im wesentlichen aus Titanoxid, Boroxid und Magnesium besteht, der exothermen Reaktion des Reaktionsgemisches an Luft, wobei man eine reagierte Masse erhält, die Titandiborid und Magnesiumoxid enthält, und des Auslaugens der reagierten Masse mit einer Lösung zum Auslaugen mit einem pH-Wert im Bereich von etwa 0,5 bis etwa 8, wobei das Submikron-Titandiborid gewonnen wird, umfaßt.

2. Verfahren zur Herstellung von amorphem und kristallinem Titandiborid mit Submikron-Teilchengröße, das folgende Stufen umfaßt:
Bildung eines pulverisierten Reaktionsgemisches, das im wesentlichen aus Titanoxid, Boroxid und Magnesium besteht, wobei das Magnesium und das Boroxid in Gewichtsmengen im Bereich von etwa 5 bis 30 % im Überschrüß über ihre stöchiometrischen Mengen vorhanden sind;
lokales Zünden des Reaktionsgemisches an der Luft, um das Reaktionsgemisch exotherm reagieren zu lassen ;
Abkühlen des erhaltenen Produkts aus der exothermen Reaktion;
Auslaugen der reagierten Masse mit einer Lösung zum Auslaugen mit einem pH-Wert im Bereich von etwa 0,5 bis etwa 8, bis die reagierte ausgelaugte Masse im wesentlichen nur Titandiborid in der Lösung zum Auslaugen enthält; und
Gewinnung von Submikron-Titandiboridpulver aus der Lösung zum Auslaugen.

3. Verfahren zum Herstellen von Submikron-Titandiborid, das die Stufen der Bildung eines pulverisierten Reaktionsgemisches, das im wesentlichen aus Titanoxid, Boroxid und Magnesium besteht, die exotherme Umsetzung des Reaktionsgemisches an Luft, wobei man ein reagiertes Produkt erhält, das Titandiborid und Magnesiumoxid enthält, des raschen Abkuhlens des reagierten Produkts und des anschließenden Auslaugens des reagierten Produkts mit einer Lösung zum Auslaugen mit einem pH-Wert im Bereich von etwa 0,5 bis etwa 8, wobei das Submikron-Titandiborid gewonnen wird, umfaßt.

4. Verfahren nach Anspruch 2, wobei das Magnesium und das Boroxid in Gewichtsmengen von etwa 10 % im Überschuß über ihre stöchiometrischen Mengen vorhanden sind.

5. Verfahren nach Anspruch 3, wobei die exotherme Reaktion des pulverisierten Reaktionsgemisches ein kontinuierliches Verfahren darstellt.

6. Verfahren nach Anspruch 1, wobei die exotherme Reaktion durch lokales Zünden eingeleitet wird.

7. Verfahren nach Anspruch 1, wobei die Reduktion des Titanoxids und des Boroxids mit Magnesium durch lokales Zünden eingeleitet wird.

8. Verfahren nach Anspruch 1, wobei das Magnesium und das Boroxid in Gewichtsmengen in einem Bereich von etwa 5 bis 30 % im Überschuß über ihre stöchiometrischen Mengen vorhanden sind.

9. Verfahren nach Anspruch 1, wobei die Stufe der Reduktion des Titanoxids und des Boroxids mit Magnesium die Zufuhr der Reaktanten durch einen Trichter in eine heiße Zone innerhalb des Trichters und das Zünden der Reaktanten innerhalb der heißen Zone umfaßt.

10. Verfahren nach Anspruch 3, wobei die Reaktanten durch lokales Zünden gezündet werden.

11. Verfahren nach Anspruch 9, wobei die Reaktanten durch lokales Zünden gezündet werden.

12. Verfahren nach einem der Ansprüche 2 oder 3, dadurch gekennzeichnet, daß eine Salpetersäurelösung als Lösung zum Auslaugen verwendet wird.

13. Grundstoff, umfassend ein teilchenförmiges Submikron-Titandiborid, das nach einem Verfahren hergestellt wurde, das folgende Stufen umfaßt:
(a) Bildung eines pulverisierten Reaktionsgemisches, das Titanoxid, Boroxid und Magnesium umfaßt;
(b) exotherme Reaktion des Reaktionsgemisches an Luft, wobei man eine reagierte Masse erhält, die Titandiborid und Magnesiumoxid enthält;
(c) Auslaugen der reagierten Masse mit einer Lösung zum Auslaugen mit einem pH-Wert im Bereich von etwa 0,5 bis etwa 8;
(d) Gewinnung von teilchenförmigem Submikron-Titandiborid mit einer mittleren Teilchengröße von 1 µm oder weniger aus der Lösung zum Auslaugen.

14. Grundstoff nach Anspruch 13, dadurch gekennzeichnet, daß in Stufe c) eine Salpetersäurelösung als Lösung zum Auslaugen verwendet wurde.

15. Grundstoff nach Anspruch 13, wobei der Grundstoff amorphes Submikron-Titandiborid ist.

16. Grundstoff nach Anspruch 13, wobei der Grundstoff kristallines Submikron-Titandiborid ist.

17. Grundstoff nach Anspruch 13, wobei der Gundstoff ein Gemisch ein Gemisch aus amorphem und kristallinem Submikron-Titandiborid ist.

18. Grundstoff nach Anspruch 13, wobei der Grundstoff eine Oberfläche von mehr als etwa 25 m²/g aufweist.

19. Geformtes Produkt, erhalten durch Formen des teilchenförmigen Titandiborids nach Anspruch 13 zu einem dichten Formling bei einer Formungstemperatur von etwa 1500°C oder weniger.

20. Grundstoff nach Anspruch 19, wobei der Grundstoff eine Härte von etwa 2800 bis etwa 3400 Knoop aufweist.

21. Grundstoff nach Anspruch 19, wobei der Grundstoff einen elastischen Modul von etwa 700 bis etwa 813 GPa aufweist.

22. Grundstoff nach Anspruch 19, wobei der Grundstoff hinsichtlich der Kornmorphologie ein Länge-Durchmesser-Verhältnis von etwa 2:1 bis etwa 100:1 aufweist.

23. Verfahren zur Herstellung eines geformten Produkts nach Anspruch 19, wobei das teilchenförmige Titandiborid zu einem dichten Formling bei etwa 689 kPa (100 psi) bis etwa 41,4 MPa (6000 psi) für etwa 2 bis etwa 4 Stunden geformt wird.

24. Verfahren zur Herstellung eines geformten Produkts nach Anspruch 19, wobei das teilchenförmige Titandiborid durch Heißpressen zu einem dichten Formling geformt wird.

25. Verfahren zur Herstellung eines geformten Produkts nach Anspruch 19, wobei das teilchenförmige Titandiborid durch druckloses Sintern zu einem dichten Formling geformt wird.

## Revendications

1. Procédé de fabrication de diborure de titane sub-micronique, qui comprend les étapes de formation d'un mélange de réaction pulvérisé consistant essentiellement en oxyde de titane, oxyde de bore et magnésium, réaction exothermique du mélange de réaction dans l'air pour fournir une masse ayant réagi contenant du diborure de titane et de la magnésie, et lessivage de la masse ayant réagi avec une solution de lessivage ayant un pH dans la gamme d'environ 0,5 à environ 8, pour récupérer le diborure de titane sub-micronique.

2. Procédé de fabrication de diborure de titane amorphe et cristallin de dimension particulaire sub-micronique, qui comprend les étapes de:
formation d'un mélange de réaction pulvérisé consistant essentiellement en oxyde de titane, oxyde de bore et magnésium, dans lequel le magnésium et l'oxyde de bore sont présents en des quantités en poids dans la gamme d'environ 5 à 30% en excès par rapport à leur quantité stoechiométrique;
inflammation locale de ce mélange de réaction à l'air pour faire réagir le mélange de réaction de façon exothermique ;
refroidissement du produit résultant provenant de la réaction exothermique;
lessivage de la masse ayant réagi avec une solution de lessivage ayant un pH dans la gamme d'environ 0,5 à environ 8, jusqu'à ce que la masse lessivée ne contienne en substance que du diborure de titane dans la solution de lessivage; et
récupération de poudre de diborure de titane sub-micronique de la solution de lessivage.

3. Procédé de fabrication de diborure de titane sub-micronique, qui comprend les étapes de formation d'un mélange de réaction pulvérisé consistant essentiellement en oxyde de titane, oxyde de bore et magnésium, réaction exothermique du mélange de réaction dans l'air pour fournir un produit ayant réagi contenant du diborure de titane et de la magnésie, refroidissement rapide du produit ayant réagi et ensuite, lessivage du produit ayant réagi avec une solution de lessivage ayant un pH dans la gamme d'environ 0,5 à environ 8, pour récupérer du diborure de titane sub-micronique.

4. Procédé suivant la revendication 2, dans lequel le magnésium et l'oxyde de bore sont présents en des quantités en poids d'environ 10% en excès par rapport à leur quantité stoechiométrique.

5. Procédé suivant la revendication 3, dans lequel la réaction exothermique du mélange de réaction pulvérisé est un procédé continu.

6. Procédé suivant la revendication 1, dans lequel la réaction exothermique est démarrée par une inflammation locale.

7. Procédé suivant la revendication 1, dans lequel la réduction de l'oxyde de titane et de l'oxyde de bore avec le magnésium est démarrée par une inflammation locale.

8. Procédé suivant la revendication 1, dans lequel le magnésium et l'oxyde de bore sont présents en des quantités en poids comprises dans la gamme d'environ 5 à 30% en excès par rapport à leur quantité stoechiométrique.

9. Procédé suivant la revendication 1, dans lequel l'étape de réduction d'oxyde de titane et d'oxyde de bore avec le magnésium comprend l'introduction des constituants de la réaction à travers une trémie dans une zone chaude à l'intérieur de la trémie et l'inflammation des constituants de la réaction à l'intérieur de la zone chaude.

10. Procédé suivant la revendication 3, dans lequel les constituants de la réaction sont enflammés par une inflammation locale.

11. Procédé suivant la revendication 9, dans lequel les constituants de la réaction sont enflammés par une inflammation locale.

12. Procédé suivant les revendications 2 ou 3, caractérisé en ce qu'une solution d'acide nitrique est utilisée comme solution de lessivage.

13. Matériau de fabrication comprenant un diborure de titane particulaire sub-micronique, formé par un procédé qui comprend les étapes de:
(a) formation d'un mélange de réaction pulvérisé comprenant de l'oxyde de titane, de l'oxyde de bore et du magnésium;
(b) réaction exothermique du mélange de réaction dans l'air pour fournir une masse ayant réagi contenant du diborure de titane et de la magnésie;
(c) lessivage de la masse ayant réagi avec une solution de lessivage ayant un pH dans la gamme d'environ 0,5 à environ 8; et
(d) récupération de diborure de titane particulaire sub-micronique ayant une dimension particulaire moyenne de 1 µm ou moins, de la solution de lessivage.

14. Matériau suivant la revendication 13, caractérisé en ce que dans l'étape (c), une solution d'acide nitrique est utilisée comme solution de lessivage.

15. Matériau de fabrication suivant la revendication 13, dans lequel ce matériau est un diborure de titane sub-micronique amorphe.

16. Matériau de fabrication suivant la revendication 13, dans lequel ce matériau est un diborure de titane sub-micronique cristallin.

17. Matériau de fabrication suivant la revendication 13, dans lequel ce matériau est un mélange de diborure de titane amorphe et cristallin de dimension sub-micronique.

18. Matériau de fabrication suivant la revendication 13, dans lequel ce matériau a une aire superficielle supérieure à environ 25 m²/g.

19. Produit façonné obtenu par formage du diborure de titane particulaire suivant la revendication 13 en une forme dense à une température de formage d'environ 1.500°C ou moins.

20. Matériau de fabrication suivant la revendication 19, dans lequel ce matériau a une dureté d'environ 2.800 à environ 3.400 Knoop.

21. Matériau de fabrication suivant la revendication 19, dans lequel ce matériau a un module élastique d'environ 700 à environ 813 GPa.

22. Matériau de fabrication suivant la revendication 19, dans lequel ce matériau a une morphologie de grain ayant un rapport d'aspect d'environ 2:1 à environ 100:1.

23. Procédé de fabrication d'un produit façonné suivant la revendication 19, dans lequel le diborure de titane particulaire est formé en une configuration dense sous une pression comprise entre environ 689 kPa et environ 41,4 MPa (100 à 6000 psi) et pendant environ 2 à environ 4 heures.

24. Procédé de fabrication d'un produit façonné suivant la revendication 19, dans lequel le diborure de titane particulaire est formé en une configuration dense par pressage à chaud.

25. Procédé de fabrication d'un produit façonné suivant la revendication 19, dans lequel le diborure de titane particulaire est formé en une configuration dense par frittage sans pression.
